# EUROPÄISCHE PATENTANMELDUNG

(11) **EP 2 374 552 A2**
(43) Veröffentlichungstag der Anmeldung: **12.10.2011**
(21) Anmeldenummer: 11160434.4
(22) Anmeldetag: 30.03.2011
(51) Int. Cl.: B21C 51/00, B21F 1/02, B21F 11/00, G01P 3/36

(54) **Richt- und Abschneidemaschine**

(30) Priorität: 06.04.2010 DE 102010014384
(71) Anmelder: WAFIOS AG, 72764 Reutlingen (DE)
(72) Erfinder: Leibfritz, Egon, 72800 Eningen (DE); Storz, Peter, 72108 Rottenburg (DE)
(74) Vertreter: Patentanwälte Ruff, Wilhelm, Beier, Dauster & Partner

(57) **Zusammenfassung**

Eine Richt- und Abschneidemaschine zum Herstellen von gerichteten Elementen mit vorgebbarer Länge aus einem drahtförmigen Material (105), insbesondere zum Herstellen von gerichteten Stäben aus Betonstahldraht, hat eine Vorschubeinrichtung (112,114) zum Einziehen von Material von einem Materialvorrat, eine vorzugsweise rotierende Richteinrichtung (120) zum Richten des von der Vorschubeinrichtung in einen Arbeitsbereich der Richteinrichtung geförderten Materials, eine der Richteinrichtung nachgeschaltete Schnitteinrichtung (130) zum Abtrennen eines Abschnitts vorgebbarer Länge von dem gerichteten Material zur Erzeugung des gerichteten Elements, ein Längenmesssystem (180) zum Messen der Länge des Materials und zum Erzeugen eines die Länge repräsentierenden Messsignals, sowie eine Steuereinrichtung zur Ansteuerung der Schnitteinrichtung auf Basis des Messsignals. Das Messsystem ist ein berührungslos arbeitendes optisches Messsystem, insbesondere ein Lasermesssystem, das auch bei hohen Durchlaufgeschwindigkeiten dauerhaft eine Längenmessung mit großer Messgenauigkeit ermöglicht.

## Beschreibung

Die Erfindung bezieht sich auf eine Richt- und Abschneidemaschine zum Herstellen von gerichteten Elementen mit vorgebbarer Länge aus einem drahtförmigen Material, insbesondere zum Herstellen von gerichteten Stäben aus Betonstahldraht.

Richt- und Abschneidemaschinen, die gelegentlich auch als Richt- und Ablängmaschinen oder schlicht als Richtmaschinen bezeichnet werden, sind dafür konzipiert, Drähte und andere durch Richten bearbeitbare Materialien mit unterschiedlichen Querschnittsgrößen und -formen zu richten und auf eine gewünschte Länge abzuschneiden. Auf diese Weise können beispielsweise gerippte Drähte aus Betonstahl zu gerichteten Stäben verarbeitet werden, die nachfolgend zu Betonstahlmatten für die Armierung von Betonkonstruktionen netzartig zusammengeschweißt werden. Auch ungerippte, glatte Drähte können verarbeitet werden, um z.B. gerichtete Drahtstäbe zum Aufbau von Käfigen, Einkaufswagen, Zäunen, Körben o.dgl. zu erhalten.

Eine bekannte Richtmaschine hat eine Vorschubeinrichtung zum Einziehen des zu richtenden Materials von einem Materialvorrat, eine Richteinrichtung zum Richten des von der Einzugseinrichtung in einen Arbeitsbereich der Richteinrichtung geförderten Materials und eine der Richteinrichtung nachgeschaltete Schnitteinrichtung zum Abtrennen eines Abschnitts vorgebbarer Länge von dem gerichteten Material zur Erzeugung des gerichteten Elements. Das Material liegt üblicherweise auf einer Drahtspindel (coil) vor, wird mittels Schubwalzen der Vorschubeinrichtung vom Drahtvorrat abgespult und in die Richteinrichtung geführt, wo der noch mit Spannungen und Biegungen versehene Draht geradgerichtet wird. Im Anschluss daran wird das nun gerichtete Material von Zugwalzen der Vorschubeinrichtung aus der Richteinrichtung gezogen und in Richtung eines sogenannten Anbaus gefördert. Ist bei dem gerichteten Materialabschnitt die gewünschte Länge erreicht, so wird der Abschnitt mit Hilfe der Schnitteinrichtung abgeschnitten und fällt in eine Sammelmulde. Auf diese Weise können gerichtete Elemente mit großer Länge von mehreren Metern oder mehreren 10 Metern und geringen Längentoleranzen hergestellt werden.

Der Schnitt, mit dem das gerichtete Element vom Material abgetrennt wird, muss zum richtigen Zeitpunkt bzw. an der richtigen Stelle des geförderten Materials erfolgen, um die gewünschte Länge mit der gewünschten Genauigkeit zu erhalten. Hierzu hat eine Richt- und Abschneidemaschine ein Längenmesssystem zum Messen der Länge des bewegten Materials und zum Erzeugen eines die Länge repräsentierenden Messsignals, welches dann von einer Steuereinrichtung zur Ansteuerung der Schnitteinrichtung verarbeitet wird. Zur Längenmessung werden heutzutage unterschiedliche Messmethoden eingesetzt.

Eine bekannte Methode arbeitet mit Hilfe eines Messrades, dessen Umfang so auf das durchlaufende Material gedrückt wird, dass das Messrad vom Material angetrieben wird und mit diesem mitläuft. Die Welle des Messrades überträgt die Drehbewegung auf einen Drehgeber, dessen Gebersignale für eine indirekte Längenmessung verarbeitet werden. Um einen Schlupf zwischen Messrad und dem bewegten Material zu unterbinden, wird ein Laufrad von der Gegenseite gegen das Material gepresst, wodurch das Material zwischen dem Messrad und dem Laufrad eingespannt wird. Die Ausgestaltung des Messrades kann je nach zu richtendem Material variieren. Beim Richten von geripptem Baustahl wird beispielsweise normalerweise ein am Umfang gezahntes Messrad eingesetzt, um eine bestmögliche Mitnahme zu erreichen. Bei glatten Materialoberflächen werden gelegentlich Messräder mit glatter Umfangsfläche eingesetzt, insbesondere dann, wenn die Oberfläche des durchlaufenden Materials nicht beschädigt werden darf. Bei manchen Ausgestaltungen wird zur Vergrößerung der Anpressfläche eine umlaufende Rille in den Umfang des Messrades eingebracht, wodurch der Schlupf zwischen Messrad und Material verringert werden kann.

Die Längenmessung mit Hilfe eines Messrades ist eine konstruktiv einfache und robuste Messmethode. Bei der Verwendung von Messrädern ist allerdings zu beachten, dass nach einer gewissen Nutzungsdauer durch Abnutzung am Messradumfang die Messgenauigkeit allmählich geringer werden kann. Eine häufigere Kalibrierung oder eine Auswechslung von Messrädern ist daher zu empfehlen. Weitere Ungenauigkeiten bzw. Messfehler können durch unzureichende Reibung zwischen Material und Messrad entstehen, also durch Schlupf. Eine Verminderung dieses Problems durch Erhöhung des Anpressdrucks ist zwar möglich, wirkt sich aber in der Regel nachteilig auf den Verschleiß aus, welcher wiederum bei längerer Nutzung zu Messungenauigkeiten führen kann.

Eine andere Möglichkeit der Längenmessung besteht in der Verwendung eines manuell verstellbaren Auslösekopfs im Anbau. Bei diesem Verfahren erfolgt die Schnittauslösung über den Auslösekopf, der je nach gewünschter Länge des gerichteten Elementes auf einer Tragschiene des Anbaus an geeigneter Position fixiert wird. Hierzu wird in der Regel eine an einem Führungselement des Anbaus befestigte Skala verwendet. Wenn die freie vordere Endfläche des gerichteten Materials beim Vorschub auf einen Auslösehebel trifft, schwenkt dieser aus der Bewegungsbahn des Materials heraus und löst über ein Signal den Schnitt aus. Der Auslösekopf kann auch noch einen Anschlag enthalten, der in einem geringen Abstand hinter der Kontaktfläche des Auslösehebels angebracht ist. Während der Schnittauslösung trifft in diesen Fällen das Element auf den Anschlag, um eine möglichst exakte Länge zu erreichen. Da bei Längenmessung mit manuell verstellbarem Auslösekopf die Längenmessung erst sehr kurz vor dem Schnitt erfolgt, ist der Weg, auf dem noch Messfehler auftreten können, sehr gering, so dass sehr hohe Messgenauigkeiten erzielbar sind. Die Längentoleranzen bei Verwendung eines Anschlages können im Bereich weniger Zehntel Millimeter liegen, ohne Anschlag werden in der Regel Toleranzen in der Größenordnung von ein bis zwei Millimeter erreicht. Das Messverfahren mit Auslösekopf ist zwar genau, jedoch ist das Einrichten bei der Einstellung einer neuen Soll-Länge relativ aufwendig und erfordert Erfahrung beim Bediener. Varianten mit Anschlag sollten bei Maschinen mit rotierendem Schnitt nicht eingesetzt werden, da das Material sonst beim Schneiden auf den Anschlag geschoben wird.

### AUFGABE UND LÖSUNG

Vor dem Hintergrund dieses Standes der Technik liegt der Erfindung die Aufgabe zugrunde, eine Richt- und Abschneidemaschine bereitzustellen, die in der Lage ist, im Dauerbetrieb mit großer Stückleistung gerichtete Elemente mit sehr geringen Abweichungen von der gewünschten Soll-Länge herzustellen. Eine Umstellung auf andere Soll-Längen soll mit nur geringem Aufwand möglich sein. Die Präzision bei der Längeneinstellung soll möglichst wenig von der Erfahrung des Bedieners abhängen.

Zur Lösung dieser und anderer Aufgaben stellt die Erfindung eine Richt- und Abschneidemaschine mit den Merkmalen von Anspruch 1 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Diese Aufgabe wird bei gattungsgemäßen Richt- und Abschneidemaschinen dadurch gelöst, dass das Messsystem ein berührungslos arbeitendes Messsystem ist. Ein berührungslos arbeitendes Messsystem ist in der Lage, eine Längenmessung bzw. eine Geschwindigkeitsmessung des in einer Durchlaufrichtung durchlaufenden Materials zu gewährleisten, ohne dass ein Berührungskontakt zwischen einem Element des Messsystems und dem durchlaufenden Material vorliegt. Dadurch können unter anderem diejenigen Probleme des Standes der Technik vermieden werden, die sich durch Verschleiß von Messelementen und durch einen eventuellen Schlupf zwischen dem bewegten Material und einen Messelement ergeben. Ein berührungsloses Messsystem kann dauerhaft verschleißfrei arbeiten, so dass die Messgenauigkeit nicht von der Nutzungsdauer abhängt. Es entfallen auch verschleißbedingte Wartungs- oder Reparaturarbeiten. Das gemessene Material wird geschont.

Bei bevorzugten Ausführungsformen ist das Messsystem ein optisches Messsystem, also ein Messsystem, bei dem Licht aus einem geeigneten Wellenlängenbereich des elektromagnetischen Spektrums zur Messung und Bewertung der Bewegung des Materials verwendet wird. Dabei wird die Wechselwirkung von Licht aus dem sichtbaren Wellenlängenbereich oder daran angrenzenden Wellenlängenbereichen des Spektrums mit dem bewegten Material mit Hilfe optischer Systeme und optischer Effekte erfasst und ausgewertet. Berührungslose Messungen hoher Genauigkeit sind hier auch bei hohen Bewegungsgeschwindigkeiten des bewegten Materials möglich.

Umfangreiche Untersuchungen haben ergeben, dass es im Hinblick auf die verschiedenen Randbedingungen bei Richt- und Abschneidemaschinen in der Regel besonders vorteilhaft ist, wenn das Messsystem ein Lasermesssystem ist, das eine Einrichtung zur Erzeugung mindestens eines auf das Material gerichteten Laserstrahls und Einrichtungen zur Erfassung der Wechselwirkung zwischen dem Laserstrahl und einer Oberfläche des Materials aufweist. Beispielsweise kann eine Laserdistanzmessung eingesetzt werden, bei der ein Laserstrahl im Wesentlichen koaxial zum bewegten Material auf eine Stirnseite des Materials gerichtet wird. Für die Ausrichtung des Messstrahls ist ein relativ hoher Aufwand zu treiben, und es sollten Maßnahmen zur Reduzierung der Staub- und Schmutzempfindlichkeit des Messsystems getroffen werden.

Als wesentlich günstiger hat es sich herausgestellt, wenn das Messsystem derart eingerichtet ist, dass der Laserstrahl in einer quer zu einer Durchlaufrichtung des Materials verlaufenden Einstrahlrichtung auf die Oberfläche des Materials trifft. Die Einstrahlrichtung kann dann beispielsweise in Radialrichtung zur Durchlaufrichtung oder in einem spitzen Winkel dazu erfolgen. Eine im Wesentlichen radiale Einstrahlung des Laserstrahls kann vorteilhaft sein, weil dann für diejenigen Komponenten, die unmittelbar für die Erzeugung und Strahlführung des Lasers und die Erfassung der Laserstrahlung nach Wechselwirkung mit dem Material benötigt werden, in der Regel nur wenig axialer Bauraum benötigt wird, so dass eine Integration in Richt- und Abschneidemaschinen einfach möglich ist. Eine möglichst exakte radiale Einstrahlung kann bei manchen Varianten günstig sein, um z.B. eine hohe Messgenauigkeit zu erhalten. Wenn Abweichungen von der radialen Einstrahlung vorliegen, sollten diese gering sein. Vorzugsweise beträgt ein Winkel zwischen einer Radialrichtung zur Durchlaufrichtung und der Einstrahlrichtung weniger als 30° oder weniger als 20° oder weniger als 10° oder weniger als 5°.

Alternativ zu einem Lasermesssystem könnten auch optische Messsysteme verwendet werden, die beispielsweise nach dem CCD-Ortsfilterverfahren oder nach dem Gitter-Durchlichtverfahren arbeiten.

Als besonders vorteilhaft hat es sich herausgestellt, wenn ein Lasermesssystem verwendet wird, welches nach dem Laser-Dopplerprinzip arbeitet. Bei geeigneter Auslegung können hier höchste Messgenauigkeiten für eine Vielzahl von Durchmessern des Materials von beispielsweise ca. 0,5 mm bis zu 30 mm oder mehr und für die meisten typischerweise bei Richt- und Abschneidemaschinen vorkommenden Bewegungsgeschwindigkeiten (typischerweise zwischen 3 m/min und 400 m/min erzielt werden. Der von einem Laser ausgehende Laserstrahl wird dabei mit Hilfe eines Strahlteilers in zwei kohärente Teilstrahlen zerlegt, die mittels schräg zueinander auf einen Bereich des Messobjekts projiziert werden, sich dort überlagern und im Überlagerungsbereich ein System von Interferenzstreifen erzeugen. Partikel oder Strukturen auf der Oberfläche des Messgutes streuen das Licht beim Passieren der hellen Streifen. Ein Detektor empfängt dieses Streulicht, welches mit einer Dopplerfrequenz moduliert ist, aus der die Geschwindigkeit der Streuzentren und damit auch die Geschwindigkeit der bestrahlten Oberfläche ermittelt werden kann. Die durchgelaufene Länge kann durch Integration der Geschwindigkeit bestimmt werden.

Bei manchen Varianten wird eine Frequenzverschiebung zwischen den beiden Sendestrahlen des Laser-Doppler-Messsystems erzeugt, so dass sich ein sich bewegendes Interferenzstreifensystem ergibt. Dadurch ist es u.a. möglich, auch bis zum Stillstand des Messobjekts mit hoher Präzision zu messen.

Bei der Integration eines berührungslosen Messsystems in eine Richt- und Abschneidemaschine sind zahlreiche Randbedingungen zu berücksichtigen, wobei bei Verwendung eines Lasermesssystems auch die Bedienersicherheit eine große Rolle spielt. Typischerweise hat die Richt- und Abschneidemaschine eine Bedienerseite und eine bedienerferne Seite, wobei kritische Komponenten der Maschine für Wartungs-Reparatur- und Einrichtarbeiten von der Bedienerseite zugänglich sein sollten und die Antriebe normalerweise an der bedienerfernen Seite angeordnet sind. Vorzugsweise ist das Messsystem derart eingerichtet, dass der Laserstrahl von der Bedienerseite auf das Material trifft, so dass Augensicherheit für die Bediener gewährleistet ist. Um andererseits zu erreichen, dass die Bedienung der Maschine durch Komponenten des Messsystems nicht beeinträchtigt wird, sollte die Bedienerseite zumindest im Bereich des Materialdurchlaufs frei von Komponenten des Messsystems sein. Bei bevorzugten Ausführungsformen liegt die Durchlaufrichtung des Materials in einer Vertikalebene und das Messsystem ist derart eingerichtet, dass eine Einstrahlrichtung des Laserstrahls mit der Vertikalebene einen Winkel von weniger als 45°, insbesondere von weniger als 20° einschließt, wobei der Laserstrahl vorzugsweise von oben auf das Material trifft.

Bei einem laserbasierten Messsystem sollte der Laserstrahl möglichst ohne Unterbrechungen kontinuierlich auf das bewegte Material treffen, um ständig oder in sehr hoher Frequenz Messsignale erzeugen zu können. In dieser Hinsicht bestehen bei Richt- und Abschneidemaschinen besondere Bedingungen. In der Richteinrichtung wird das durchlaufende Material in mehreren schräg zueinander verlaufenden Richtungen mechanisch umgeformt, um die gewünschte Richtwirkung zu erreichen. Bei bevorzugten Ausführungsformen hat die Richteinrichtung ein im Betrieb rotierendes Richtwerk, mit dem es möglich ist, ein Richten des Materials in allen Ebenen zu erreichen. Durch den mechanischen Eingriff der Richteinrichtung am Material können in diesem Spannungen, insbesondere auch Torsionsspannungen, entstehen, die sich im weiteren Verlauf des Materialtransports gelegentlich ruckartig entladen. Dies kann zu einem unruhigen Materiallauf und damit verbundenen Messfehlern führen, wenn keine Gegenmaßnahmen getroffen werden.

Bei bevorzugten Ausführungsformen hat die Vorschubeinrichtung ein Paar von hinter der Richteinrichtung angeordneten, um parallele Drehachsen gegenläufig drehbaren Zugwalzen und ein Messkopf des Messsystems ist zwischen den Zugwalzen und der Schnitteinrichtung angeordnet. Die Zugwalzen haben vorzugsweise eine konkave Umfangskontur bzw. eine umlaufende Rille, so dass sie im Bereich ihrer größten Annäherung eine Führungsöffnung für das gerichtete Material mit einer gewissen Seitenführung bieten. Wenn sich Torsionsspannungen innerhalb des Drahtes abbauen wollen, so kann sich der Draht geringfügig innerhalb der Führungsöffnung drehen, wodurch das Material unter Schlupf in Umfangsrichtung entspannt wird. Da unmittelbar hinter den Zugwalzen eine seitliche Bewegung des Material stark begrenzt ist, ist es besonders günstig, die Messstrahlung in diesem Bereich auf das Material zu richten, da dieses dort seitlich nicht ausweichen kann.

In der Regel ist eine der Zugwalzen maschinenfest gelagert, während die andere Zugwalze in einer senkrecht zur Drehachse verlaufenden Abheberichtung gegen die Kraft einer beispielsweise pneumatisch arbeitenden Andrückeinrichtung verlagerbar ist. Diese Beweglichkeit der einen Drehachse erlaubt es, dass die beweglich gelagerte Zugwalze in Abheberichtung ausweichen kann, wenn Verdickungen, Rippen, Schmutz und/oder andere Unregelmäßigkeiten durch die Führungsöffnung der Zugwalzen laufen. Da in solchen Fällen für das Material ein gewisser Spielraum parallel zur Abheberichtung existiert, ist bei bevorzugten Ausführungsformen das Messsystem derart eingerichtet, dass eine Einstrahlrichtung des mindestens einen Laserstrahls mit der Abheberichtung einen Winkel von weniger als 45°, insbesondere von weniger als 20° einschließt, wobei der Laserstrahl vorzugsweise von oben auf das Material trifft. Dadurch kann erreicht werden, dass der Laserstrahl auch dann auf dem Material verbleibt, wenn dieses sich in Abheberichtung abhebt. Messfehler aufgrund von Unregelmäßigkeiten des Materials können dadurch vermieden werden. Durch eine Anordnung eines Messkopfs des Messsystems oberhalb der Durchlaufrichtung kann auch verhindert werden, dass optische Komponenten und/oder Sensoren des Messsystems schnell verschmutzen, so dass ein wartungsarmer Dauerbetrieb möglich ist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ausführungsbeispiele der Erfindung sind in den Zeichnungen dargestellt und werden im Folgenden näher erläutert.

### KURZBESCHREIBUNG DER ZEICHNUNGSFIGUREN

- Fig. 1: zeigt eine Übersichtsdarstellung einer Ausführungsform einer Richt- und Abschneidemaschine zum Herstellung von gerichteten Stäben aus Betonstahl von der Bedienerseite;
- Fig. 2: zeigt einen Ausschnitt der in Fig. 1 gezeigten Richtmaschine mit einem zwischen Zugwalzen und rotierender Schnitteinrichtung angeordneten Messkopf eines Laser-Doppler-Messsystems; und
- Fig. 3: zeigt eine Ansicht des in Fig. 2 gezeigten Messkopfs aus einer Richtung parallel zur Durchlaufrichtung des gerichteten Materials.

### DETAILLIERTE BESCHREIBUNG DER BEVORZUGTEN AUSFÜHRUNGSFORMEN

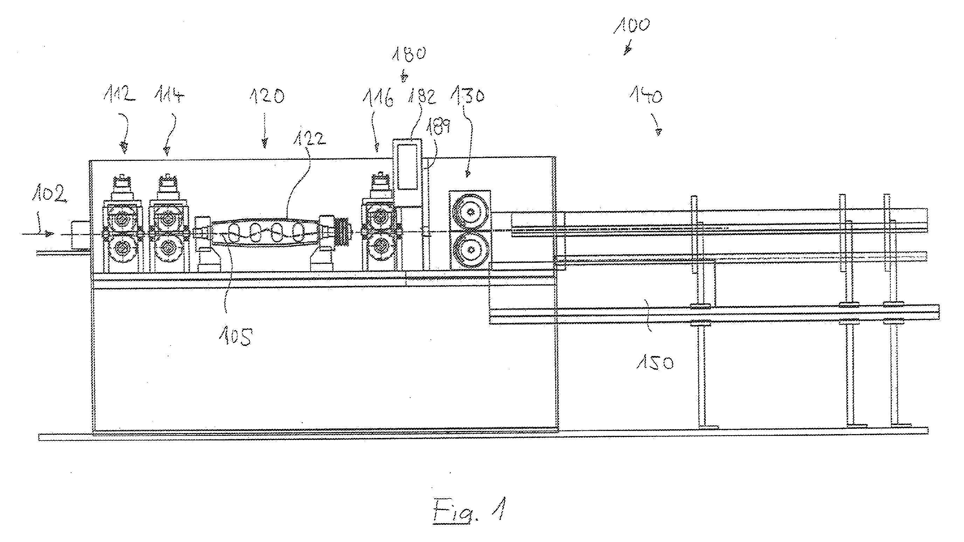

Fig. 1 zeigt eine Übersichtsdarstellung einer Ausführungsform einer Richt- und Abschneidemaschine 100 zum Herstellen von gerichteten Elementen mit vorgebbarer Länge aus einem drahtförmigen metallischen Material 105. Die im Folgenden auch schlicht als "Richtmaschine" 100 bezeichnete mehrachsige CNC-Werkzeugmaschine ist zum Herstellen von gerichteten Stäben aus geripptem Betonstahldraht ausgelegt. Derartige Drähte liegen typischer Weise mit Drahtdurchmessern zwischen 3,5 mm und 30 mm, ggf. auch mit anderen Durchmessern vor. Die gerade gerichteten und auf die richtige Länge geschnittenen Betonstahldrahtelemente werden in großen Mengen zum Herstellen von Betonstahlmatten benötigt, die als Armierungselemente für Betonkonstruktionen benutzt werden. Sind die hergestellten, geradegerichteten Betonstahlstäbe zu kurz, so kann dies bei der Herstellung der netzartigen Betonstahlmatten zu unverbundenen Stellen zwischen Längs- und Querstäben und damit zur Schwächung der Konstruktion führen. Sind die Stäbe zu lang, ergeben sich Probleme bei der Handhabung der Baustahlmatten. Daher sind für die gerichteten Stäbe enge Längentoleranzen einzuhalten.

Die Richtmaschine ist in der Lage, bei hohem Materialdurchsatz und Durchlaufgeschwindigkeiten bis zu 160 m/min oder mehr, ggf. sogar von bis zu 360 m/min oder 400 m/min, große Stückzahlen solcher gerichteten Elemente mit gegebenenfalls mehreren Metern Länge mit sehr kleinem Längenfehler im Bereich von Promille oder darunter herzustellen.

Das drahtförmige Material liegt zunächst auf einer großen Drahtspule (coil) vor und wird mit Hilfe einer Vorschubeinrichtung vom Materialvorrat abgezogen und in die Richtmaschine hineingefördert. Die Vorschubeinrichtung hat an der Eingangsseite der Richtmaschine zwei hintereinander angeordnete Paare von Schubwalzen 112, 114, die den Draht vom Materialvorrat abziehen und in Richtung der in Durchlaufrichtung 102 nachgeschalteten Richteinrichtung 120 fördern. Die Richteinrichtung dient zum Geraderichten des von den Schubwalzen in den Arbeitsbereich der Richteinrichtung geförderten Materials und hat zu diesem Zweck einen rotierend antreibbaren Richtflügel 122 mit mehreren mit axialem Abstand hintereinander angeordneten und radial gegeneinander versetzten Durchführungsöffnungen für das Material. Solche rotierenden Richtsysteme sind an sich bekannt und werden daher hier nicht näher erläutert.

Unmittelbar hinter der Richteinrichtung ist ein Paar von Zugwalzen 116 angeordnet, die zur Vorschubeinrichtung der Richtmaschine gehören und das gerichtete Material aus der Richteinrichtung herausziehen. Mit Abstand hinter den Zugwalzen ist eine der Richteinrichtung nachgeschaltete Schnitteinrichtung 130 angebracht, die zum Abtrennen von Abschnitten vorgebbarer Länge von dem gerichteten Material vorgesehen ist, um dadurch die gerichteten Elemente vorgebbarer Länge zu erzeugen.

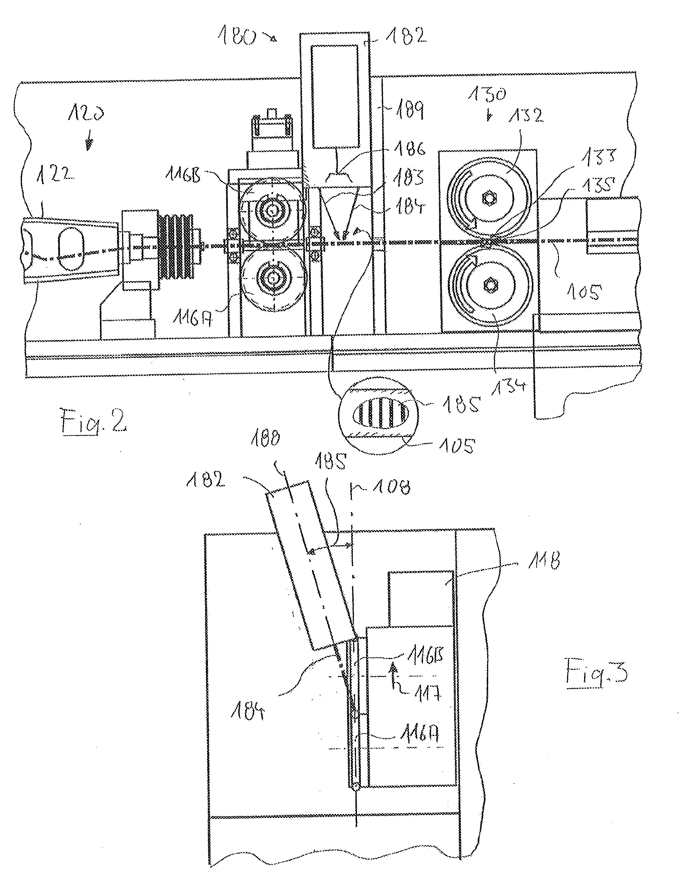

Die in Fig. 2 besonders gut zu erkennende Schnitteinrichtung 130 ist für einen rotierenden Schnitt ausgelegt, so dass das Material während des Schneidvorganges ohne Vorschubunterbrechung immer gleichmäßig durch den rotierenden Richtflügel und die Schneideinrichtung laufen kann. Bei einer Richtmaschine mit einer rotierenden Schere wird der Draht ohne abzubremsen und ohne Drahtstillstand abgetrennt. Der Schneidvorgang besteht dabei aus verschiedenen Phasen. Zunächst werden die gegenläufig rotierend antreibbaren Schneidwerkzeugträger 132, 134 so beschleunigt, dass ihre Umfangsgeschwindigkeit beim Eingriff der Schneidwerkzeuge 133, 135 am Draht mindestens der Drahtgeschwindigkeit entspricht. Nach Erreichen einer geeigneten Geschwindigkeit wird der Draht durch Eintauchen der Schneidwerkzeuge abgetrennt. Diese Situation ist in Fig. 2 gezeigt. Im Beispielsfall bewegen sich die Schneidwerkzeuge beim Schnitt sogar schneller als der Draht, so dass mit dem Schnitt der abgetrennte Stab nach vorne weggeschleudert wird und eine Lücke zum nachfolgenden Draht entsteht.

Die Schneidwerkzeuge werden dann wieder in ihre Ausgangsstellung gefahren, so dass die rotierenden Schneidwerkzeugträger pro Schnitt eine Umdrehung machen. Beim Schneiden ohne Drahtstillstand kann der Rippenabrieb im Bereich der Zugwalzen minimiert werden. Außerdem entstehen in dem Material im Bereich der Richteinrichtung keine ungleichmäßigen Gefügeveränderungen, da jeder Abschnitt des Materials im Bereich der Richteinrichtung die gleiche Umformwirkung erfährt.

An der Auslaufseite der Richtmaschine befindet der sogenannte Anbau 140 mit einer Führungsrinne, in die die gerichteten Elemente hineingeschoben werden. Wird die eingestellte Länge erreicht, so wird der Draht abgeschnitten und fällt in eine Sammelmulde 150. Dieser Grundaufbau kann für unterschiedliche Längen genutzt werden. Gerichtete Elemente aus Betonstahldraht sind typischerweise mehrere Meter lang und können beispielsweise bis zu 25 m lang sein. Mit dem gleichen Prinzip können jedoch auch kürzere Elemente hergestellt werden.

Um die gewünschte Länge der gerichteten Elemente mit hoher Genauigkeit zu erreichen, ist ein Längenmesssystem zum Messen der Länge des Materials und zum Erzeugen eines die Länge repräsentierenden Messsignals vorgesehen. Das Messsignal wird von einer nicht näher dargestellten computerbasierten Steuereinrichtung der Richtmaschine zum Ansteuern der Schnitteinrichtung 130 verarbeitet, um einen positionsrichtigen Schnitt zu erzeugen.

Bei der Ausführungsform ist ein berührungslos arbeitendes Messsystem in Form eines Lasermesssystems vorgesehen, das nach dem Laser-Dopplerprinzip arbeitet. Details zur Anbringung sind in den Fig. 2 und 3 dargestellt, wobei Fig. 2 einen vergrößerten Ausschnitt der Richtmaschine im Bereich des Messkopfes 182 und Fig. 3 eine Ansicht in Durchlaufrichtung des Drahtes auf die der Richteinrichtung abgewandte Ausgangsseite der Zugwalzen 116 zeigt.

Ein Messkopf 182 des Lasermesssystems ist oberhalb der Durchlaufrichtung des Drahtes unmittelbar hinter den Zugwalzen 116 zwischen den Zugwalzen 116 und der Schnitteinrichtung 130 angebracht. Der Messkopf ist an der den Zugwalzen zugewandten Vorderseite einer etwa mittig zwischen den Zugwalzen 116A, 116B und der Schnitteinrichtung 130 maschinenfest angebrachten vertikalen Zwischenwand 189 befestigt, also näher an den Zugwalzen als an der Schnitteinrichtung. Die als Träger für den Messkopf dienende Zwischenwand hat eine Durchlassöffnung für das Material 105. Die Lage des Messkopfs an der Zwischenwand 189 kann über Justierschrauben eingestellt werden.

Im Messkopf 182 ist ein Laser untergebracht, der einen Laserstrahl erzeugt. Der Laserstrahl wird mit Hilfe eines Strahlteilers in zwei Teilstrahlen zerlegt, die mit Hilfe einer Sendeoptik als schräg zueinander verlaufende Sendestrahlen 183, 184 auf die Oberfläche des Drahtes eingestrahlt werden. Die Winkelhalbierende zwischen den Sendestrahlen definiert die Sensorlängsachse, die möglichst senkrecht auf der als Messoberfläche dienenden Oberfläche des Drahtes und damit möglichst genau radial zur Zentralachse des Drahtes bzw. zur Durchlaufrichtung ausgerichtet sein sollte. Der Arbeitsabstand zwischen der Strahlaustrittsfläche des Messkopfs und der Drahtoberfläche liegt bei ca. 200 mm. Dieser geringe Arbeitsabstand ist vorteilhaft, damit der geteilte Laserstrahl die Drahtoberfläche auch bei Schwingungen der Vorrichtung immer zuverlässig trifft. Die Geometrie der Anordnung ist dabei so getroffen, dass sich die kohärenten Sendestrahlen im Bereich der schmalen gekrümmten Oberfläche des überwachten durchlaufenden Drahtmaterials 105 in einem Überlappungsbereich 185 (siehe Detail) überlappen. In diesem Bereich (Messvolumen) entsteht ein System von abwechselnd hellen und dunklen Interferenzstreifen mit einem durch die Wellenlänge der Sendestrahlen (hier im roten Teil des sichtbaren Spektrums) und dem Winkel zwischen ihnen gegeben Streifenabstand. Streuzentren auf der Materialoberfläche, beispielsweise Partikel oder eine gewisse Oberflächenrauhigkeit durchlaufen dieses Streifensystem und streuen das Licht beim Passieren der hellen Streifen. Ein Detektor 186 empfängt dieses Streulicht, das mit einer Dopplerfrequenz moduliert ist, welche proportional zur Geschwindigkeitskomponente des Materials in Durchlaufrichtung ist. Die durchgelaufene Länge kann durch Integration der Geschwindigkeit über die Zeit bestimmt werden. Dieses Messverfahren wird durch die Rippen an der Drahtoberfläche nicht beeinträchtigt und ist unabhängig von der Rippenform. Bei Richtmaschinen mit rotierendem Schnitt und dementsprechend kontinuierlich durchlaufendem Material sind einfache und robuste Ausführungsformen derartiger Messsysteme mit Vorteil einsetzbar.

Bei einer nicht gezeigten Ausführungsform wird das von einer Laserdiode kommende Laserlicht durch einen optoakustischen Modulator in Form einer Braggzelle in zwei Teilstrahlen zerlegt. Die Braggzelle teilt den Laserstrahl nicht nur, sondern sie erzeugt auch in einem der beiden Teilstrahlen eine Frequenzverschiebung gegenüber dem anderen Teilstrahl, so dass sich im Überlappungsbereich ein System von laufenden Interferenzstreifen ergibt. Dadurch ist es möglich, sowohl das Vorzeichen der Bewegungsgeschwindigkeit zu bestimmen als auch beim Materialstillstand zu messen. Messgenauigkeiten für die Durchlaufgeschwindigkeit im Bereich von 1 mm/min oder darunter sind regelmäßig erreichbar. Insbesondere ist auch eine präzise Messung bei Ausführungsformen mit stehendem Schnitt möglich.

Die beiden Teilstrahlen 183, 184 definieren eine Einstrahlebene 188, in der auch die Sensorlängsachse (Winkelhalbierende zwischen den Teilstrahlen) liegt. Wie in Fig. 3 gut zu erkennen ist, erfolgt die Einstrahlung auf den Draht 105 von schräg oben derart, dass die Einstrahlebene 188 mit einer durch den Draht 105 verlaufenden Vertikalebene 108 einen Winkel 185 von weniger als 20°, im Beispielsfall etwa 16° einschließt. Dadurch kann das vom Messkopf ausgehende Laserlicht nicht direkt in die Augen eines Bedieners gelangen, so dass Augensicherheit gegeben ist. Selbst bei reflektierenden Messobjektsoberflächen wäre Augensicherheit noch gegeben, da die reflektierte Strahlung von der Bedienerseite weg zur bedienerabgewandten Seite gerichtet wäre. Durch die schräge Beleuchtung von oben ist weiterhin der Bereich des Messortes (Überlappungsbereich 185) unmittelbar hinter den Zugwalzen von der Bedienerseite bequem zugänglich, so dass eventuelle Arbeiten in diesem Bereich durch den Messkopf 182 nicht behindert werden. Die Sensorik und Optik des Messkopfes wird durch die Anordnung oberhalb des durchlaufenden Materials vor Verschmutzung weitgehend geschützt.

Die geometrische Anordnung ist so getroffen, dass die Teilstrahlen zu jeder Zeit in einem Überlagerungsbereich auf den durchlaufenden Draht treffen, auch wenn es im gerichteten Material zu plötzlichen Entspannungen der in dem rotierenden Richtflügel erzeugten Torsionsspannungen und/oder zum Durchtritt von Unregelmäßigkeiten des Materials kommen sollte. Hierzu tragen mehrere konstruktive Maßnahmen bei.

In Fig. 3 ist zu erkennen, dass die Zugwalzen 116 an ihren jeweiligen Umfangsflächen umlaufende Rillen bzw. eine konkave Kontur haben, so dass sich im Bereich größer Annäherung der Zugwalzen eine mehr oder weniger kreisförmige Führungsöffnung ergibt, die dem durchlaufenden Material eine Seitenführung gegen seitliches Ausweichen bietet. Der Draht kann also seitlich nicht aus dem Überlappungsbereich der Teilstrahlen herauswandern.

Geringfügige Ausweichbewegungen nach oben sind dagegen konstruktiv zugelassen, um Unregelmäßigkeiten des Materials u.ä. zu kompensieren. Hierzu ist vorgesehen, dass die untere Zugwalze 116A in einem maschinenfesten Drehlager gelagert ist, während die obere Zugwalze 116B derart beweglich gelagert ist, dass eine geringfügige Verlagerung in einer vertikalen Abheberichtung 117 möglich ist. Dadurch kann die obere Zugwalze etwas angehoben werden, um bei der Einrichtung der Maschinen einen Draht von der Seite zwischen die Führungswalzen einzuführen. Die obere Zugwalze wird mit Hilfe einer pneumatisch betätigbaren Andrückeinrichtung 118 in Richtung der unteren Zugwalze gedrückt, kann jedoch vom durchlaufenden Material gegen die Kraft der Andrückeinrichtung kurzzeitig nach oben abgehoben werden. Auch diese Abhebebewegung beeinträchtigt jedoch die Messung nicht, da die Teilstrahlen des Lasermesssystems im Wesentlichen von oben auf die Mitte des Drahtes gerichtet sind und diese Mitte auch dann noch treffen, wenn der Draht geringfügig nach oben angehoben wird.

Dadurch ist eine kontinuierliche berührungslose optische Längen- bzw. Geschwindigkeitsmessung ohne Messlücken auch unter den besonderen Randbedingungen einer Richtmaschine mit rotierendem Richtsystem sichergestellt

Einige Vorteile der Erfindung wurden anhand eines Beispiels einer Richtmaschine zum Herstellen von gerichteten Stäben aus geripptem Betonstahldraht erläutert. Mit der gleichen oder mit anderen Ausführungsformen kann auch ungerippter Baustahl verarbeitet werden und/oder Drähte aus anderen Materialien aus dem Glattdrahtbereich. Erfindungsgemäße Richt- und Abschneidemaschinen sind jedoch nicht auf die Verarbeitung von Drahtmaterialien beschränkt. Es können auch Rohre oder Profile gerichtet und präzise abgelängt werden. Je nach Durchmesser und Querschnittsprofil des Materials sind entsprechend dimensionierte Komponenten für das Führen und Richten vorzusehen.

Andere Ausführungsformen mit berührungslosem Messsystem können mit einem stehenden Schnittsystem ausgestattet sein, also einer Schnitteinrichtung mit einer stehenden Schere. Diese werden häufig bei glatten Drähten eingesetzt und bieten hervorragende Schnittqualität, erfordern jedoch normalerweise einen kurzzeitigen Drahtstillstand beim Schneiden.

## Patentansprüche

1. Richt- und Abschneidemaschine zum Herstellen von gerichteten Elementen mit vorgebbarer Länge aus einem drahtförmigen Material, insbesondere zum Herstellen von gerichteten Stäben aus Betonstahldraht, mit:
einer Vorschubeinrichtung zum Einziehen von Material (105) von einem Materialvorrat;
einer Richteinrichtung (120) zum Richten des von der Vorschubeinrichtung in einen Arbeitsbereich der Richteinrichtung geförderten Materials;
einer der Richteinrichtung nachgeschalteten Schnitteinrichtung (130) zum Abtrennen eines Abschnitts vorgebbarer Länge von dem gerichteten Material zur Erzeugung des gerichteten Elements;
einem Längenmesssystem (180) zum Messen der Länge des Materials und zum Erzeugen eines die Länge repräsentierenden Messsignals; sowie
einer Steuereinrichtung zur Ansteuerung der Schnitteinrichtung (130) auf Basis des Messsignals;
**dadurch gekennzeichnet, dass** das Messsystem ein berührungslos arbeitendes Messsystem (180) ist.

2. Richt- und Abschneidemaschine nach Anspruch 1, worin das Messsystem (180) ein Lasermesssystem ist, das eine Einrichtung zur Erzeugung mindestens eines auf das Material (105) gerichteten Laserstrahls (183, 184) und Einrichtungen zur Erfassung der Wechselwirkung zwischen dem Laserstrahl und einer Oberfläche des Materials aufweist, wobei das Lasermesssystem vorzugsweise nach dem Laser-Dopplerprinzip arbeitet.

3. Richt- und Abschneidemaschine nach Anspruch 1 oder 2, worin das Messsystem derart eingerichtet ist, dass der Laserstrahl (183, 184) in einer quer zu einer Durchlaufrichtung (102) des Materials verlaufenden Einstrahlrichtung, insbesondere im Wesentlichen radial auf die Oberfläche des Materials (105) trifft, wobei vorzugsweise ein Winkel zwischen einer Radialrichtung zur Durchlaufrichtung und einer Einstrahlrichtung weniger als 30° beträgt.

4. Richt- und Abschneidemaschine nach einem der vorhergehenden Ansprüche, worin die Richt- und Abschneidemaschine (100) eine Bedienerseite und eine bedienerferne Seite hat und worin das Messsystem derart eingerichtet ist, dass der Laserstrahl (182, 184) von der Bedienerseite auf das Material trifft.

5. Richt- und Abschneidemaschine nach einem der vorhergehenden Ansprüche, worin die Durchlaufrichtung des Materials in einer Vertikalebene (108) liegt und worin das Messsystem derart eingerichtet ist, dass eine Einstrahlrichtung des Laserstrahls (183, 184) mit der Vertikalebene einen Winkel (185) von weniger als 45°, insbesondere von weniger als 20° einschließt, wobei der Laserstrahl vorzugsweise von oben auf das Material trifft.

6. Richt- und Abschneidemaschine nach einem der vorhergehenden Ansprüche, worin die Vorschubeinrichtung ein Paar von hinter der Richteinrichtung (120) angeordneten, um parallele Drehachsen gegenläufig drehbaren Zugwalzen (116) aufweist und ein Messkopf (182) des Messsystems zwischen den Zugwalzen und der Schnitteinrichtung (130), vorzugsweise unmittelbar hinter den Zugwalzen, angeordnet ist.

7. Richt- und Abschneidemaschine nach Anspruch 6, worin eine der Zugwalzen (116A) maschinenfest gelagert ist und die andere Zugwalze (116B) in einer senkrecht zur Drehachse verlaufenden Abheberichtung (117) gegen die Kraft einer Andrückeinrichtung (118) verlagerbar ist, worin das Messsystem vorzugsweise derart eingerichtet ist, dass eine Einstrahlrichtung des Laserstrahls mit der Abheberichtung einen Winkel von weniger als 45°, insbesondere von weniger als 20° einschließt, wobei der Laserstrahl vorzugsweise von oben auf das Material trifft.

8. Richt- und Abschneidemaschine nach einem der vorhergehenden Ansprüche, worin die Richteinrichtung (120) ein rotierend antreibbares Richtwerk (112) hat.

9. Richt- und Abschneidemaschine nach einem der vorhergehenden Ansprüche, worin die Schnitteinrichtung (130) ein Paar von gegenläufig drehbaren Schneidwerkzeugträgern (132, 134) aufweist.
